# EUROPEAN PATENT APPLICATION

(11) **EP 2 256 023 A1**
(43) Date of publication of application: **01.12.2010**
(21) Application number: 09725806.5
(22) Date of filing: 24.03.2009
(51) Int. Cl.: B62M 9/10

(54) **BICYCLE NEUTRAL GEAR STRUCTURE**

(30) Priority: 27.03.2008 CN 200820005646 U
(71) Applicant: Lu, I Shyong, North District Taichung City 404 (TW)
(72) Inventor: Lu, I Shyong, North District Taichung City 404 (TW)
(74) Representative: Viering, Jentschura & Partner
(86) International application number: PCT/CN2009/000311
(87) International publication number: WO 2009/117898

(57) **Abstract**

A transmission neutralizing structure for a pedal-powered vehicle is disclosed. The transmission neutralizing structure is provided on one of sprocket sets of the vehicle, and includes a free gear and a bearing by which a center of the free gear is coupled with a rotatory assembly so that the rotatory assembly and the free gear are rotationally disconnected in both directions. The pedal-powered vehicle has a chain shiftable between the sprocket set and the free gear under control of a derailleur gear unit. When the derailleur gear unit is set in a neutral gear position, the chain is engaged with the free gear. The free gear further has a safety device, which kinetically couples the free gear with the sprocket set.

## Description

### BACKGROUND OF THE INVENTION

### 1. Technical Field

The present invention relates to a transmission neutralizing structure according to the preamble of Claim 1. Accordingly, the transmission neutralizing structure is for a pedal-powered vehicle that has a gear system or a freewheel system, wherein the pedal-powered vehicles include, but are not limited to, bicycles, tricycles, tandem bicycles, folding bicycles, etc. The transmission neutralizing structure releases the gear system or freewheel system of the pedal-powered vehicle from engagement and thus puts the vehicle in neutral so that when the vehicle are drawn forward or backward, cranks and pedals of the vehicle stay still but not rotate with the movement of its wheels.

### 2. Description of Related Art

When a cyclist walks with his/her bicycle, such as one described in US Patent No. 4,838,569, a problem likely to bother him/her is the backward-turning cranks and pedals that tend to accidentally hook or hit external objects, for example, the cyclist's leg adjacent to the turning pedal. A folding bicycle, such as that disclosed in US Patent No. 7,510,202, when dragged, also has the same problem that the backward-turning cranks and pedals are seized by the folded bicycle frame, causing the folding bicycle unwalkable or even damaged.

Besides, the inventor of the present invention has previously proposed a scheme that combines a folding bicycle with a basket to allow the folding bicycle to act as a trolley when not ridden. However, the backward turning cranks and pedals substantially hinder existing pedal-powered vehicles from safely moving in narrow space, such as in an elevator, and pose underlying risks of injuring people and object around the pedal-powered vehicles or even damaging the pedal-powered vehicles themselves.

### SUMMARY OF THE INVENTION

The present invention thus proposes a compact transmission neutralizing structure as described in the claims to solve the foregoing problems happening to the existing pedal-powered vehicles whose cranks and pedals turn backward when dragged backward.

The transmission neutralizing structure of the present invention is provided at one of sprocket sets of a pedal-powered vehicle. The transmission neutralizing structure comprises a free gear and a bearing. The free gear has a center mounted around a rotatory assembly of the sprocket sets by means of the bearing so that the rotatory assembly and the free gear are rotationally disconnected in both directions. A chain of the pedal-powered vehicle is controlled by a derailleur gear unit to be shifted between the sprocket set and the free gear. When the derailleur gear unit is put in a neutral gear position, the chain is engaged with the free gear. The free gear further has a safety device, which kinetically couples the free gear and the sprocket set.

The transmission neutralizing structure of the present invention thereby has an effect that when a user drags the pedal-powered vehicle backward, both cranks and pedals of the vehicle are not driven to turn, so that external objects and the user's body can be saved from damages that may be otherwise caused by backward-turning cranks and pedals, and that ensures a safe and convenient movement of the pedal-powered vehicle.

The transmission neutralizing structure of the present invention thereby has another effect that when the pedal-powered vehicle, being a folding bicycle with a basket, is folded and used as a cart, since both cranks and pedals are not driven, the cart can be freely moved forward or backward.

The transmission neutralizing structure of the present invention thereby has another effect that prior to riding the pedal-powered vehicle, a user may set the safety device to kinetically couple the free gear and the sprocket set, so that in the user's later riding, pedals and cranks of the vehicle can drive the free gear to allow the pedal-powered vehicle to operate and advance normally.

### BRIEF DESCRIPTION OF THE DRAWINGS

The novel features believed characteristic of the invention are set forth in the appended claims. The invention itself, however, as well as a preferred mode of use, further objectives and advantages thereof, will be best understood by reference to the following detailed description of illustrative embodiments when read in conjunction with the accompanying drawings, wherein:
**Figure 1** is a perspective view of a pedal-powered vehicle with a transmission neutralizing structure of the present invention;
**Figure 2** is an exploded view of a rear sprocket set on a rear wheel with the transmission neutralizing structure of the present invention;
**Figure 3** is a sectional view of the transmission neutralizing structure on the rear sprocket set;
**Figure 4** is a schematic drawing depicting the rear wheel having the transmission neutralizing structure of the present invention;
**Figure 5** is a schematic drawing showing the transmission neutralizing structure of the present invention equipped with a safety device;
**Figure 6** is another perspective view of the pedal-powered vehicle wherein the vehicle is folded and lowed to freely move forward and backward in virtue of the transmission neutralizing structure of the present invention;
**Figure 7** is a lateral view of the pedal-powered vehicle of Figure 6;
**Figure 8** is an exploded view of a front sprocket set on a bicycle frame with the transmission neutralizing structure of the present invention;
**Figure 9** is a schematic drawing showing a gear switch of the present invention provided with a movable retainer;
**Figure 10** provides an alternative embodiment of the transmission neutralizing structure of the present invention;
**Figure 11** is an exploded view of the transmission neutralizing structure of **Figure 10** applied to a front sprocket set;
**Figure 12** is an assembled perspective view of the transmission neutralizing structure of Figure 11;
**Figure 13** is a front view according to Figure 12 showing the free gear and the rotatory assembly kinetically coupled;
**Figure 14** is another front view according to Figure 12 showing the free gear and rotatory assembly rotationally disconnected;
**Figure 15** is a partial sectional view taken along Line 15-15 of Figure 13;
**Figure 16** is a partial sectional view taken along Line 16-16 of Figure 13;
**Figure 17** is a partial sectional view taken along Line 17-17 of Figure 13;
**Figure 18** is a schematic drawing according to Figure 17 showing an operating element departed from a first annular turntable; and
**Figure 19** is a schematic drawing showing the transmission neutralizing structure of the present invention applied to the front sprocket set.

### DETAILED DESCRIPTION OF THE INVENTION

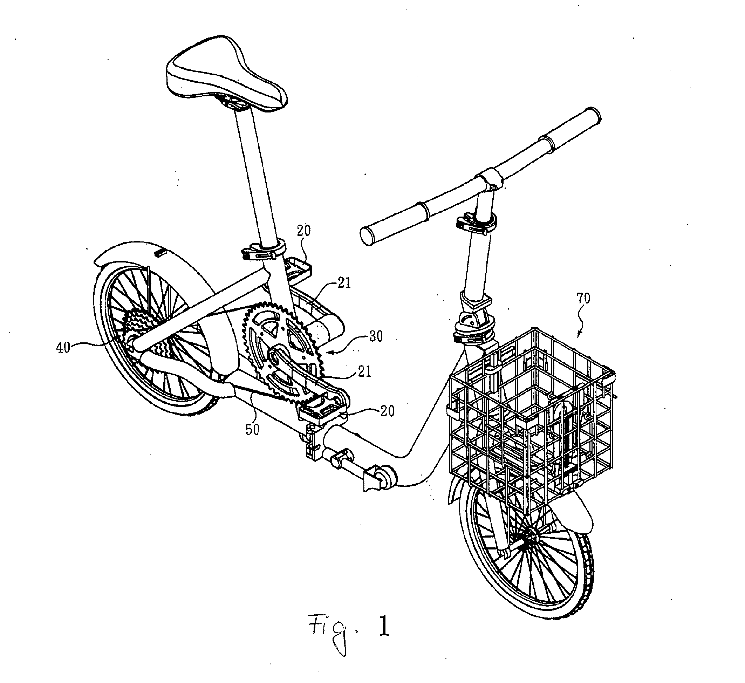

As shown in to **Figure 1****,** a transmission neutralizing structure **10** of the present invention is applied to a pedal-powered vehicle. In the pedal-powered vehicle, components associated with transmission neutralizing structure **10** include pedals **20,** cranks **21,** a front sprocket set **30,** a rear sprocket set **40,** and a chain **50.**

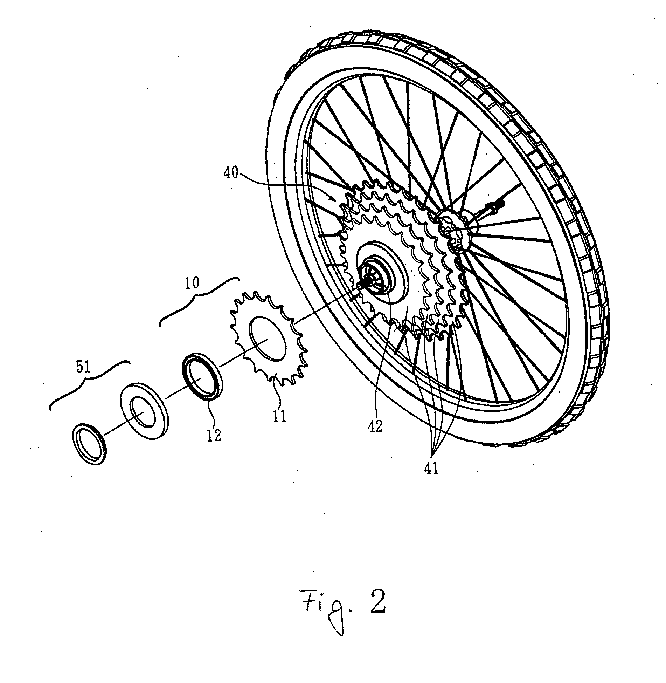

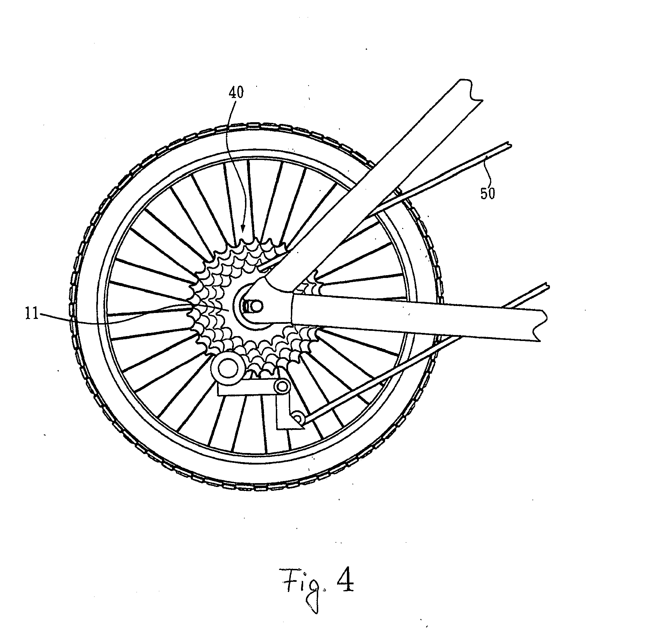

Referring to **Figures 2****,** **3** and **4****,** the transmission neutralizing structure **10** is herein applied to the rear sprocket set **40.** The rear sprocket set **40** is composed of a plurality of transmission gears **41** whose diameters and tooth numbers are subject to gradient change. The transmission gears **41** are coaxially mounted around a rotatory assembly **42,** which is mounted around an end of a rear hub **43.** The transmission gears **41,** the rotatory assembly **42** and the rear hub **43** are kinetically coupled mutually.

The transmission neutralizing structure **10** of the present invention is provided in the rear sprocket set **40,** and includes a free gear **11** and a bearing **12.** The free gear **11** is mounted around the rotatory assembly **42** with the bearing **12** settled therebetween, so that the bearing **12** makes the rotatory assembly **42** and the free gear **11** rotationally disconnected in both directions. The transmission neutralizing structure **10** may be additionally provided to the existing rear sprocket set **40,** or may be embodied by modifying any of the transmission gears **41** of the rear sprocket set **40.** In the present embodiment of the present invention, the gear smallest in diameter is implemented as the free gear **11.** A retaining assembly indicated by the numeral **51** in the drawings is fixed to the rotatory assembly **42** for axially retaining and positioning the free gear 11 and the other transmission gears **41.**

The chain **50** is controlled by a derailleur gear unit of the pedal-powered vehicle to be shifted among the transmission gears **41** and the free gear **11.** It is to be noted that when a gear switch **80** of the derailleur gear unit is put in a neutral gear position, the chain **50** is engaged with the free gear **11.** At this time, when the pedal-powered vehicle is dragged backward, the cranks **21** and the pedals **20,** instead of turning backward, stay non-driven. The underlying principle is that when the pedal-powered vehicle is dragged backward, the rotating rear wheel drives the rear hub **43** to rotate the rotatory assembly **42** and the transmission gears **41.** Thereupon, since the free gear **11** and the rotatory assembly **42** are rotationally disconnected in both directions, the free gear **11** is not driven by the rotatory assembly **42** and stays still. Consequently, the chain **50,** the front sprocket set **30,** the cranks **21** and the pedals **20** are all not driven. Thus, as long as a user, prior to his/her drag of the pedal-powered vehicle, puts the gear switch **80** of the derailleur gear unit in the neutral gear position, the cranks **21** and pedals **20** do not rotate with the backward moving vehicle, so as to ensure the safety and convenience of dragging the pedal-powered vehicle.

On the other hand, for preventing the pedal-powered vehicle in normal riding operation from being unintentionally switched to neutral gear, the present invention also provides solutions to that.

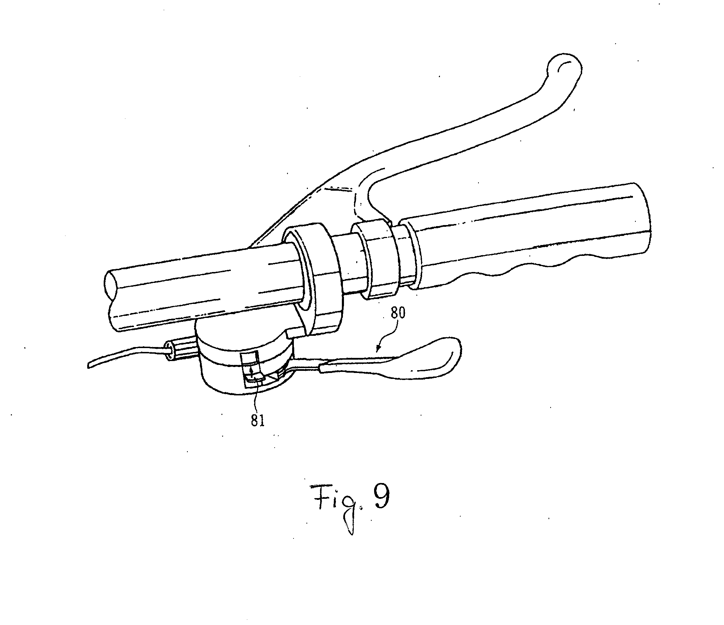

The first solution, as shown in **Figure 9****,** is to provide a movable retainer **81** to the gear switch **80.** The movable retainer **81** separates normal gear positions from the neutral gear position of the gear switch **80,** and the movable retainer **81** is configured to be operatble to the user. The user has to first operate the movable retainer **81,** which acts as a safety device, and then the gear switch **80** is allowed to be put in the neutral gear position so as to prevent the pedal-powered vehicle from being unintentionally put in neutral gear.

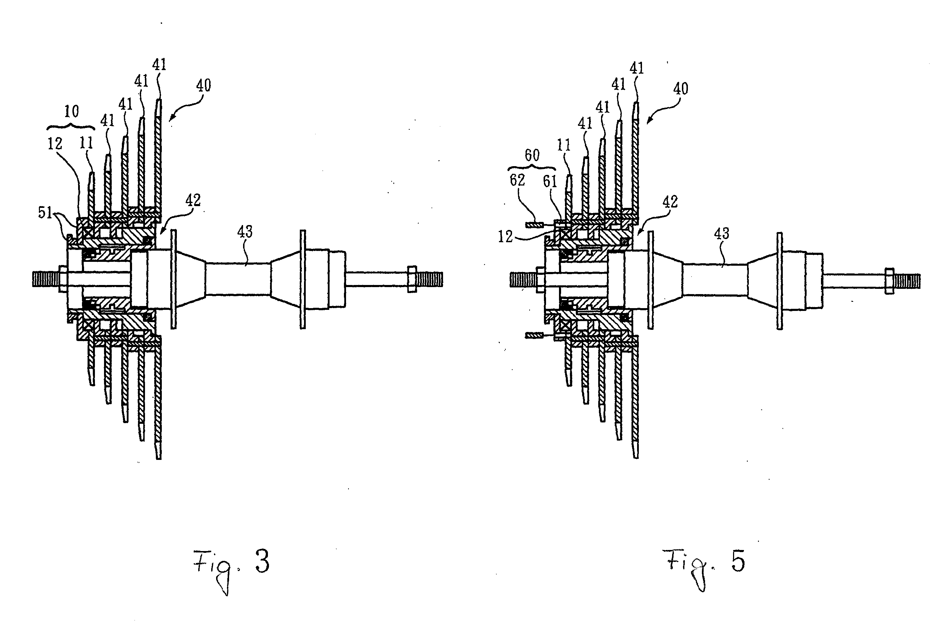

The other solution relies on a safety device **60** provided on the free gear **11.** Referring to **Figure 5****,** the safety device **60** is composed of a through hole **61** passing through the retaining assembly **51** and the free gear **11** and a positioning pin **62** received in the through hole **61.** By the safety device **60,** a kinetic connection among the rotatory assembly **42,** the retaining assembly **51** and the free gear **11,** so that when the chain **50** is engaged with the free gear **11,** the moving chain **50** drives the free gear **11** that is kinetically coupled with the retaining assembly **51** and the rotatory assembly **42,** and in turn rotates the rear hub **43** and the rear wheel. Thus, when the positioning pin **62** is set in the through hole **61** prior to the use's riding of the pedal-powered vehicle, even if the pedal-powered vehicle is unintentionally put in neutral gear during the riding, its operation remains normal.

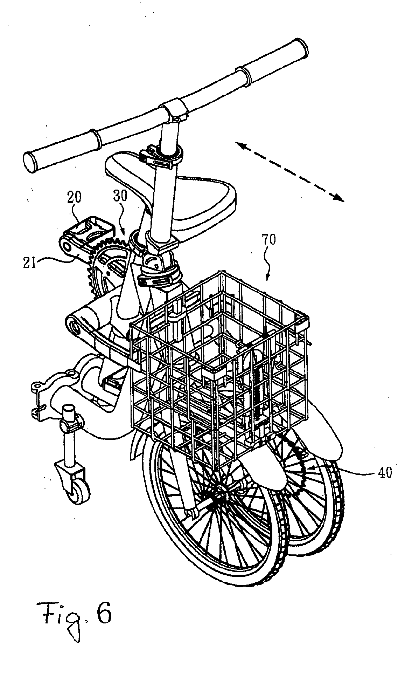

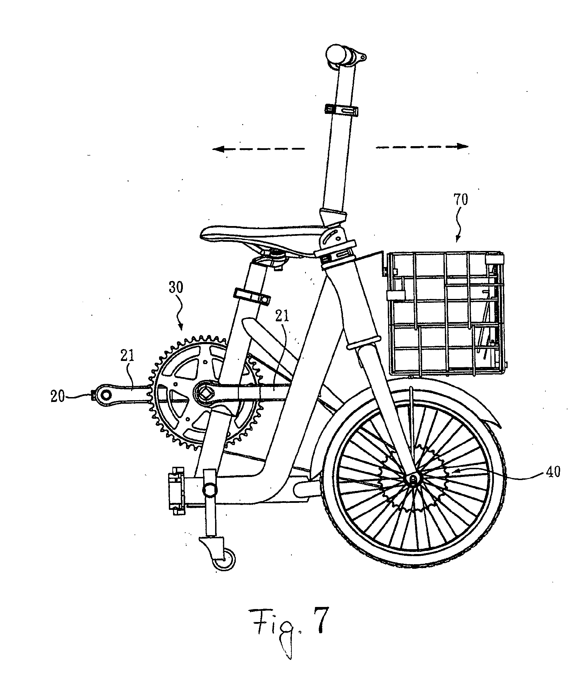

Referring to **Figures 6** and **7****,** the folded pedal-powered vehicle therein is equipped with a basket **70.** In virtue of the transmission neutralizing structure **10** of the present invention, when used as a cart, the pedal-powered vehicle is allowed to be drawn forward or backward freely without being hindered by the rotation of the pedals **20** and cranks **21** that otherwise happens when the transmission neutralizing structure **10** is absent, thereby being a manageable cart.

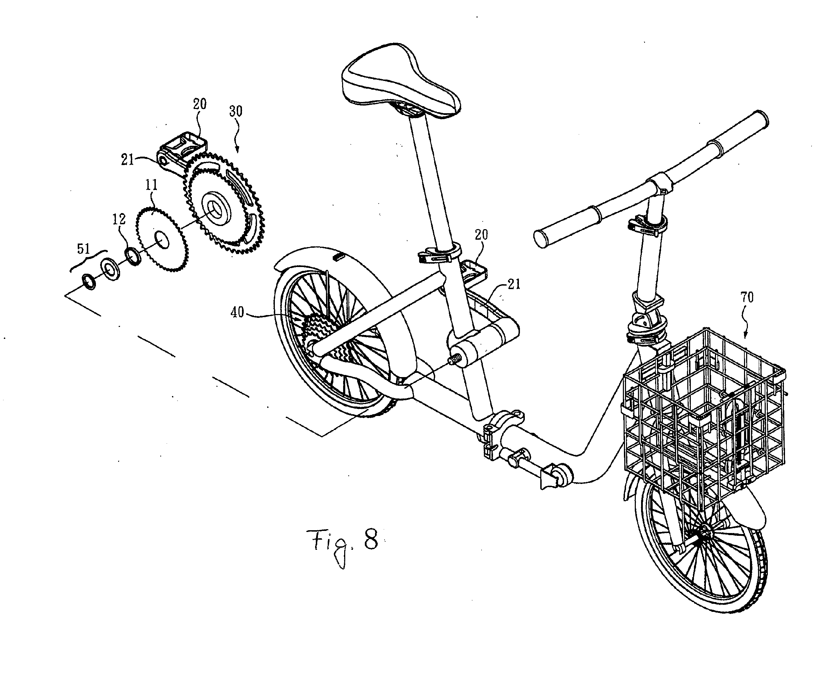

As shown in **Figure 8****,** the transmission neutralizing structure **10** of the present invention may be alternatively applied to the front sprocket set **30.**

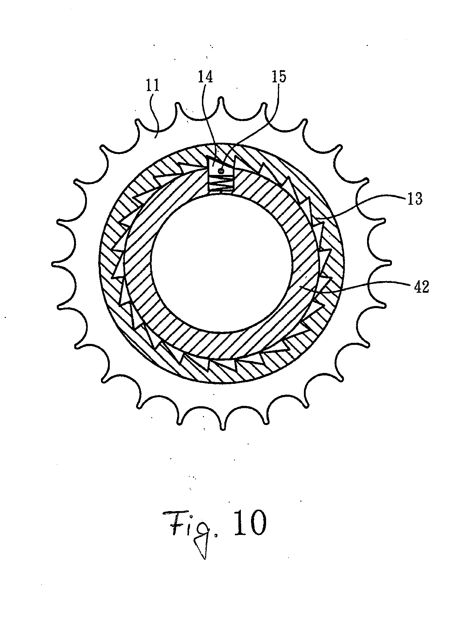

Referring to **Figure 10****,** in a second embodiment of the transmission neutralizing structure of the present invention, a one-way pawl structure is provided between the free gear **11** and the rotatory assembly **42.** More particularly, the free gear **11** has one-way pawls **13** at its inner periphery, while the rotatory assembly **42** has a pawl stopper **14** propped outward by a spring, so that when the pawl stopper **14** gets engaged with one of the one-way pawls **13**, the free gear **11** and the rotatory assembly **42** get kinetically coupled, allowing the free gear **11** to rotate in one direction for transmission. The pawl stopper **14** may be pushed by a switch **15** to thereby be hidden in the rotatory assembly **42**, so as to make the free gear **11** and the rotatory assembly **42** become rotationally disconnected in both directions.

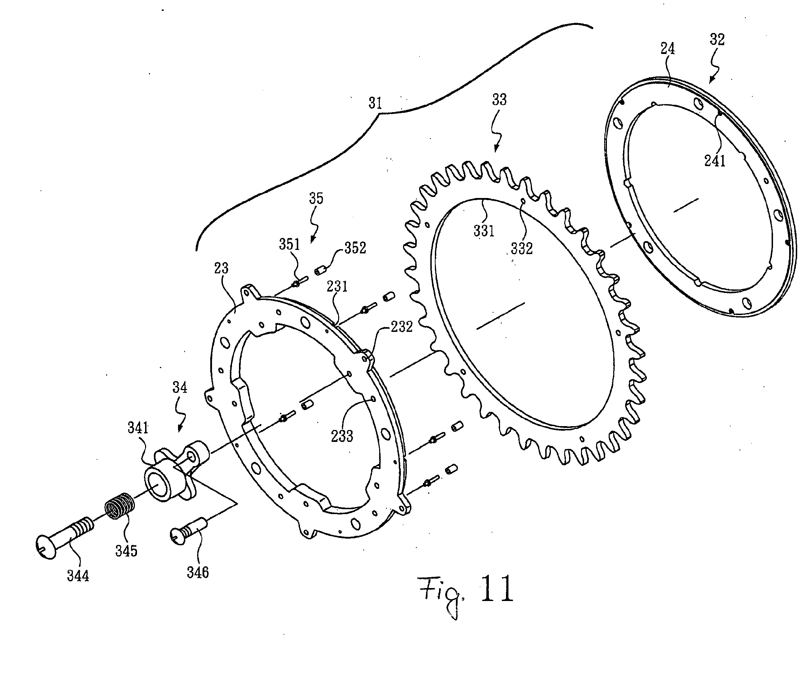

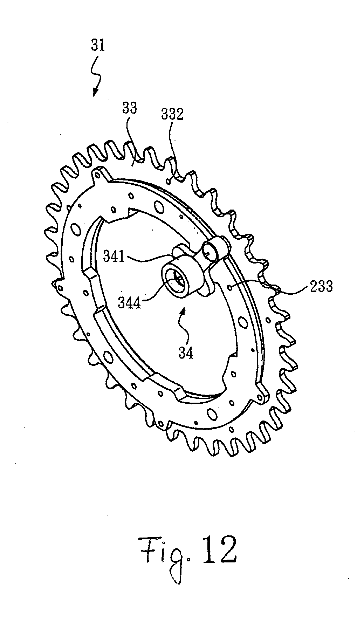

Referring to **Figures 11** through **14**, a transmission neutralizing structure **31** applied to the front sprocket set **30** includes a rotatory assembly **32**, a free gear **33** and at least one clutch assembly **34**. The rotatory assembly **32** is fixed to and rotates with the front sprocket set **30**. The free gear **33** has a center mounted around the rotatory assembly **32** with a plurality of rolling assemblies **35** deposited therebetween so that the free gear **33** and the rotatory assembly **42** are rotationally disconnected in both directions. The clutch assembly **34** is settled on the rotatory assembly **32** to kinetically couple the rotatory assembly **32** to the free gear **33**, or to make the free gear **33** rotationally disconnected with the rotatory assembly **32**.

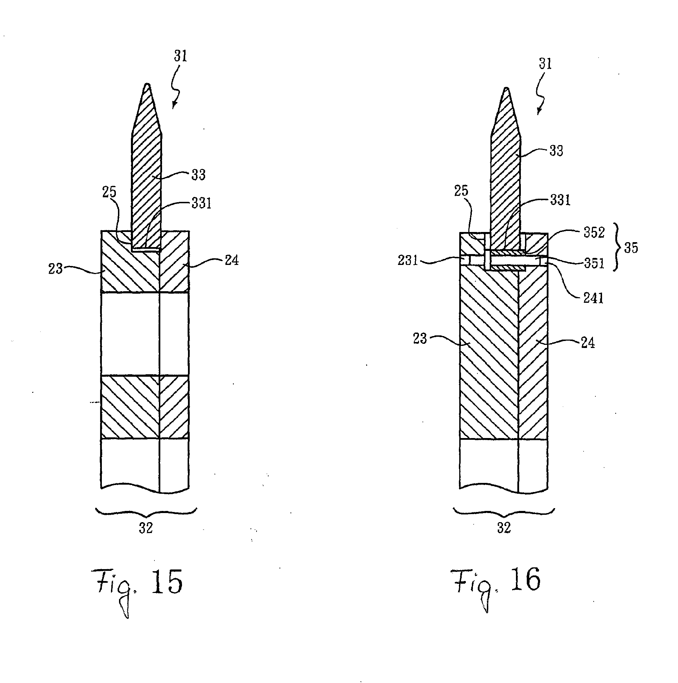

The rotatory assembly **32** includes a first annular turntable **23** and a second annular turntable **24**. The first annular turntable **23** and the second annular turntable **24** are face-to-face coupled and fixed to the front sprocket set **30**. The coupled first annular turntable **23** and second annular turntable **24** jointly define a positioning groove **25** peripherally (as shown in **Figure 15**) for receiving an inner periphery **331** of the free gear **33**.

As shown in **Figure 16**, the plural rolling assemblies **35** is settled in aligned trough holes **231**, **241** formed on the first annular turntable **23** and the second annular turntable **24**, and is contacted by the inner periphery **331** of the free gear **33** in the positioning groove **25**. Each of the rolling assemblies **35** comprises a fixer **351** and a roller **352** rotatably mounted around the fixer **351**. The inner periphery **331** of the free gear **33** contacts surfaces of the rollers **352** so that the rollers **352** helps to minimize friction that retards the rotation of the free gear **33.**

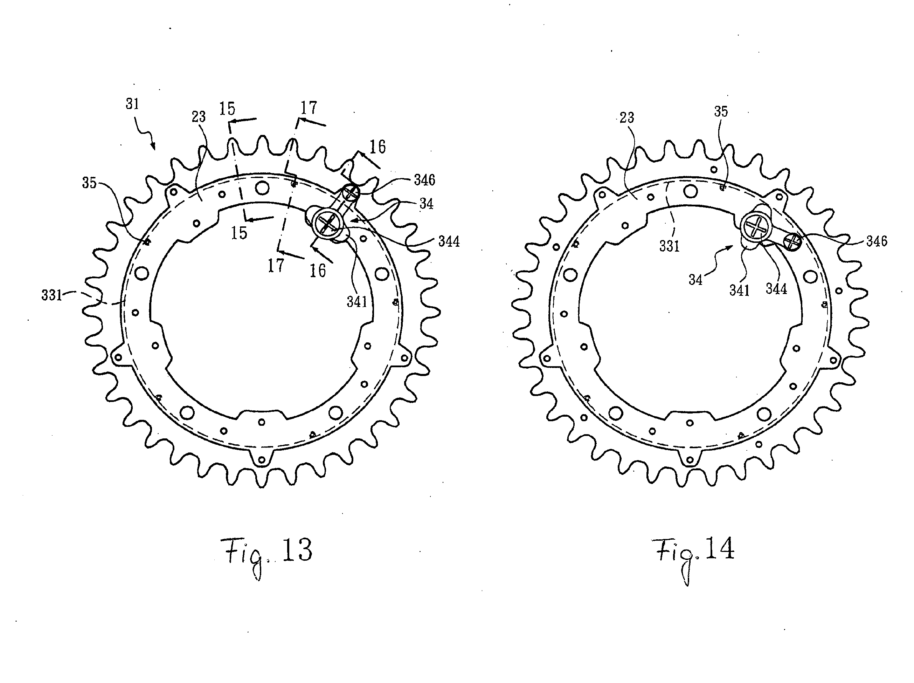

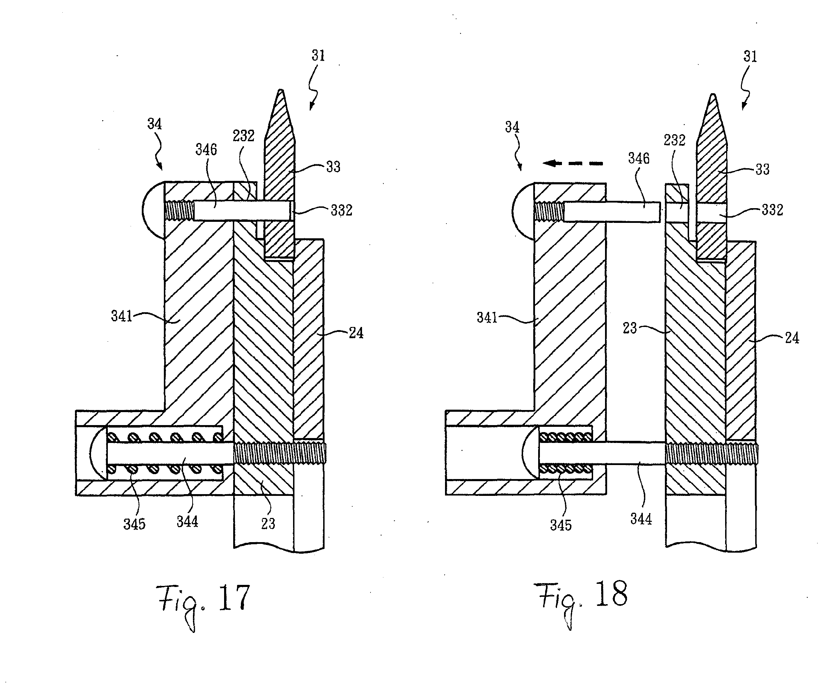

Referring to **Figures 13, 14****,** **17** and **18**, the clutch assembly **34** comprises an operating element **341**, a rotational shaft **344** and a connecting shaft **346.** The operating element **341** is positioned with respect to the first annular turntable **23** by means of the rotational shaft **344**, and is allowed to rotate against the rotational shaft **344**. The connecting shaft **346** passes through the operating element **341**, and goes through a connecting hole **232** formed on the first annular turntable **23** and a fixing hole **332** formed on the free gear **33** successively. Thereby, the free gear **33** and the rotatory assembly **32** are kinetically coupled. In other words, the rotatory assembly **32** is enabled to drive the free gear **33.**

A spring **345** is mounted around the rotational shaft **344** and located between a head of the rotational shaft **344** and the operating element **341**. The spring **345** allows the operating element **341** to normally abut against the first annular turntable **23**. By applying a force to compress the spring **345**, the operating element **341** departs from the first annular turntable **23**, and the connecting shaft **346** departs from the connecting hole **232** of the first annular turntable **23** and the fixing hole of the free gear **33**, thus dismissing the kinetic connection between the free gear **33** and the rotatory assembly **32**, and rotationally disconnecting the free gear **33** from the rotatory assembly **32.**

The first annular turntable **23** is further formed with a receiving hole **233** near the connecting hole **232**. The operating element **341** is rotated against the rotational shaft **344**, so that when the connecting shaft **346** departs from the connecting hole **232** and the fixing hole **332**, the receiving hole **233** receives the connecting shaft **346**, making the operating element **341** still positioned with respect to the first annular turntable **23** but not rotating freely to hinder other components.

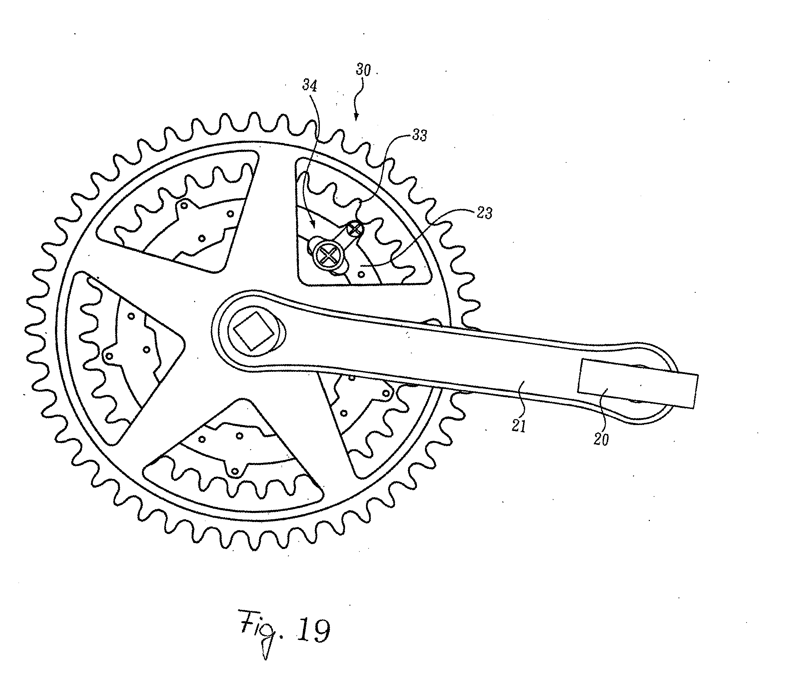

**Figure 19** shows the transmission neutralizing structure of the present invention applied to the front sprocket set. The gear switch **80** allows the chain **50** to be shifted between the free gear **33** and the front sprocket set **30.** When the chain **50** is engaged with the free gear **33,** and the connecting shaft **346** of the operating element **341** is departed from the connecting hole **232** of the first annular turntable **23** and the fixing hole 332 of the free gear **33,** the free gear **33** and the rotatory assembly **32** are rotationally disconnected in both directions. At this time, in the vehicle dragged backward, the rotating rear wheel rotates the rear hub **43** and the chain **50** thereby drives the free gear **33,** and since the free gear **33** is rotationally disconnected with the rotatory assembly **32,** the rotatory assembly **32** does not drive the front sprocket set **30,** so that the cranks **21** coupled with the front sprocket set **30** are free from turning backward.

On the contrary, when the connecting shaft **346** of the operating element **341** is received in the connecting hole **232** of the first annular turntable **23** and the fixing hole **332** of the free gear **33,** the free gear **33** and the rotatory assembly **32** are kinetically coupled with each other. At this time, rotating the cranks **21** makes the front sprocket set **30** driving the rotatory assembly **32** and the free gear **33** to rotate, thereby making the pedal-powered vehicle advance.

The present invention has been described with reference to the preferred embodiments and it is understood that the embodiments are not intended to limit the scope of the present invention. Moreover, as the contents disclosed herein should be readily understood and can be implemented by a person skilled in the art, all equivalent changes or modifications which do not depart from the concept of the present invention should be encompassed by the appended claims.

## Claims

1. A transmission neutralizing structure **(10) (31)** for a pedal-powered vehicle provided at one of sprocket sets **(30) (40)** of the pedal-powered vehicle, the transmission neutralizing structure being **characterized in**:
at least one free gear **(11) (33)** mounted around a rotatory assembly **(32) (42)** of the sprocket set **(30) (40)** such that the rotatory assembly **(32) (42)** is rotationally disconnected with the free gear **(11) (33)** in both directions.

2. The transmission neutralizing structure of Claim 1, wherein the sprocket set of the pedal-powered vehicle at which the transmission neutralizing structure **(10) (31)** is provided is a rear sprocket set **(40)** or a front sprocket set (30) of the pedal-powered vehicle.

3. The transmission neutralizing structure of Claim **1**, wherein the transmission neutralizing structure **(10)** further comprises a bearing **(12)** by which a center of the free gear **(11)** is coupled with the rotatory assembly **(42)** so that the rotatory assembly **(42)** and the free gear **(11)** are rotationally disconnected in both directions, and a safety device **(60)** is provided on the free gear **(11)** so that the free gear **(11)** and the rotatory assembly **(42)** are kinetically coupled.

4. The transmission neutralizing structure of Claim **1**, wherein one-way pawls **(13)** are provided at an inner periphery of the free gear **(11)**, and a resiliently movable pawl stopper **(14)** is provided at the rotatory assembly **(42)**, so that when the pawl stopper **(14)** gets engaged with one of the one-way pawls **(13)**, the free gear **(11)** and the rotatory assembly **(42)** get kinetically coupled, and when the pawl stopper **(14)** is disengaged from all of the one-way pawls **(13)**, the free gear **(11)** and the rotatory assembly **(42)** become rotationally disconnected in both directions.

5. The transmission neutralizing structure of Claim **1**, wherein the rotatory assembly **(32)** includes a first annular turntable **(23)** and a second annular turntable **(24)** that are face-to-face coupled and fixed to the front sprocket set **(30)** so that the coupled first annular turntable **(23)** and second annular turntable **(24)** jointly define a positioning groove **(25)** peripherally for receiving an inner periphery **(331)** of the free gear **(33)**.

6. The transmission neutralizing structure of Claim **5**, further comprising a plurality of rolling assemblies **(35)**, settled in aligned trough holes **(231) (241)** formed on the first annular turntable **(23)** and the second annular turntable **(24),** and contacted by the inner periphery **(331)** of the free gear **(33)** in the positioning groove **(25)**, each of the rolling assemblies **(35)** comprising a fixer **(351)** and a roller **(352)** rotatably mounted around the fixer **(351)**, and the inner periphery **(331)** of the free gear **(33)** contacting surfaces of the rollers **(352).**

7. The transmission neutralizing structure of Claim **5**, further comprising at least one clutch assembly **(34)** that has an operating element **(341)** rotationally positioned and axially movable with respect to the first annular turntable **(23),** the operating element **(341)** having a connecting shaft **(346)** that axially moves with respect to the fixing hole **(332)** of the free gear **(33)** according to relative positions between the operating element **(341)** and the first annular turntable **(23).**

8. The transmission neutralizing structure of Claim 7, wherein the operating element **(341)** is positioned with respect to the first annular turntable **(23)** by means of a rotational shaft **(344)**, and a spring **(345)** is mounted around the rotational shaft **(344)** so as to allow the operating element **(341)** to normally abut against the first annular turntable **(23)**, the clutch assembly **(34)** further comprising a receiving hole **(233)** formed on the first annular turntable **(23)** for receiving the connecting shaft **(346)** that is departed from the fixing hole **(332)** of the free gear **(33)**.

9. The transmission neutralizing structure of Claim **1**, wherein the pedal-powered vehicle has a derailleur gear unit and when a gear switch **(80)** of the derailleur gear unit is put into a neutral gear position, a chain of the sprocket set **(30) (40)** is engaged with the free gear **(11) (33).**

10. The transmission neutralizing structure of Claim **9**, wherein a movable retainer **(81)** is provided at the neutral gear position of the gear switch **(80)** of the derailleur gear unit and the movable retainer **(81)** is switchable.
